(19) Europäisches Patentamt

European Patent Office

Office européen des brevets

(11) **EP 1 335 441 A2**

(12) **EUROPÄISCHE PATENTANMELDUNG**

(43) Veröffentlichungstag:
**13.08.2003 Patentblatt 2003/33**

(51) Int Cl.⁷: $H01M\ 8/04$

(21) Anmeldenummer: **03000950.0**

(22) Anmeldetag: **16.01.2003**

(84) Benannte Vertragsstaaten:
**AT BE BG CH CY CZ DE DK EE ES FI FR GB GR HU IE IT LI LU MC NL PT SE SI SK TR**
Benannte Erstreckungsstaaten:
**AL LT LV MK RO**

(30) Priorität: **08.02.2002 DE 10205242**
**26.11.2002 DE 10254959**

(71) Anmelder: **Behr GmbH & Co.**
**70469 Stuttgart (DE)**

(72) Erfinder:
• **Damsohn, Herbert, Dr.**
**73773 Aichwald (DE)**
• **Kaiser, Wolfram**
**79848 Bonndorf (DE)**

(74) Vertreter: **Grauel, Andreas, Dr.**
**BEHR GmbH & Co. KG,**
**Intellectual Property,**
**G-IP,**
**Mauserstrasse 3**
**70469 Stuttgart (DE)**

(54) **Brennstoffzelle**

(57)     Die Erfindung betrifft eine Brennstoffzelle mit mindestens zwei Platten (1), Dichtungsrahmen (4) und einer dazwischen angeordneten MEA (2), wobei die Platten (1), die Dichtungsrahmen (4) und die MEA (2) Durchbrüche (5, 6) aufweisen und durch einen der Durchbrüche (5, 6) eine Kühlmittel-Leitung (5B) verläuft, wobei zwischen den Platten (1) ein Übergangsstück (4') vorgesehen ist, durch das die Kühlmittel-Leitung (5B) verläuft.

Fig. 2

EP 1 335 441 A2

**Beschreibung**

Die Erfindung betrifft eine Brennstoffzelle gemäß dem Oberbegriff des Anspruches 1.

Die Umwandlung von chemischer in elektrische Energie mittels Polymerelektrolyt-Brennstoffzellen stellt eine besonders effiziente und umweltfreundliche Methode zur Gewinnung von elektrischem Strom aus den Betriebsmedien Wasserstoff und Sauerstoff dar. Dabei finden zwei räumlich getrennte Elektrodenreaktionen statt, bei denen Elektronen freigesetzt bzw. gebunden werden:

$$H_2 => 2H^+ + 2e^- \qquad\qquad \text{(Anodische Reaktion)}$$

$$2H^+ + 2e^- + \tfrac{1}{2}\,O_2 => H_2O \qquad\qquad \text{(Kathodische Reaktion)}$$

Durch elektrische Verbindung der räumlich getrennten Reaktionszonen kann ein Teil der dabei umgesetzten Reaktionsenthalpie direkt als elektrischer Strom gewonnen werden.

Eine Polymerelektrolyt-Brennstoffzelle besteht im wesentlichen aus einer als Elektrolyt fungierenden Polymermembran, welche die Reaktanden Wasserstoff und Sauerstoff voneinander trennt und eine $H^+$-Protonenleitfähigkeit aufweist, sowie aus zwei mit Katalysatormaterial belegten Elektroden, die unter anderem zum Abgriff des von der Brennstoffzelle erzeugten elektrischen Stroms erforderlich sind. Elektroden und Polymermembran (im folgenden auch teilweise als Folie bezeichnet) werden gewöhnlich zu einer Membran-Elektroden-Anordnung (MEA) kompaktiert. Zur technischen Realisierung zweier durch den Elektrolyt voneinander getrennten, elektrisch über einen Außenleiter verbundenen Gasräume werden Bipolarplatten verwendet, die aus elektrisch leitfähigem Material bestehen und mit Gasverteilerstrukturen versehen sind, die den An- und Abtransport der Reaktionsedukte und Reaktionsprodukte ermöglichen. Somit besteht eine technische Brennstoff-Einzelzelle aus einer MEA, sowie zwei Bipolarplatten, die über Versorgungsanschlüsse mit den Betriebsmedien beaufschlagt und über die das Reaktionswasser abgeführt werden und die den beim Prozess auftretenden elektrischen Strom transportieren können.

Zwischen zwei Einzel-Brennstoffzellen wird üblicherweise eine Wärmeübertragerfläche, im Folgenden als Kühlflowfield bezeichnet, eingesetzt, die zur Abführung der anfallenden Reaktionswärme bzw. zur Einstellung des gewünschten Temperaturhaushalts eingesetzt wird. Dieses Kühlflowfield wird zumeist in die Bipolarplatten integriert und aus Gründen der besseren Wärmeübertragung von einem flüssigen Kühlmittel durchströmt.

Da die maximal erzielbare Zellenspannung einer Einzel-Brennstoffzelle physikalisch begrenzt ist und im Anwendungsfall regelmäßig unter 1 V, typischerweise im Bereich von 0,5 bis 0,7 V liegt, werden zur Herstellung höherer Spannungen und Leistungen mehrere Einzel-Brennstoffzellen in Form einer elektrischen Serienschaltung zusammengeschaltet. Dieser im Folgenden als Stapelaufbau bezeichnete Komplex besteht aus einer oder mehreren aufeinandergestapelten und in einer elektrischen Serienschaltung angeordneten, planaren Einzel-Brennstoffzellen.

Zur Versorgung der einzelnen Brennstoffzellen und Kühlflowfields mit den jeweiligen Medien werden große Hauptleitungen axial durch den Stapelaufbau hindurchgeführt, welche die einzelnen Brennstoffzellen durch seitlich abzweigende Kanalstrukturen mit den Betriebsmedien versorgen.

Auf Grund der axialen Führung der Hauptleitungen besitzt eine Einzel-Brennstoffzelle gewöhnlich sechs Durchführungen für die Hauptleitungen, die für die Zu- und Abfuhr von Brenngas, Oxidator und Kühlflüssigkeit erforderlich sind.

Diese Hauptleitungen führen dabei die Betriebsmedien auch direkt am Polymerelektrolyten vorbei, der zusammen mit einer Dichtung die Gasverteilerstrukturen der Bipolarplatten und das Kühlflowfield der Brennstoffzelle vor den jeweils unerwünschten Betriebsmedien abdichtet.

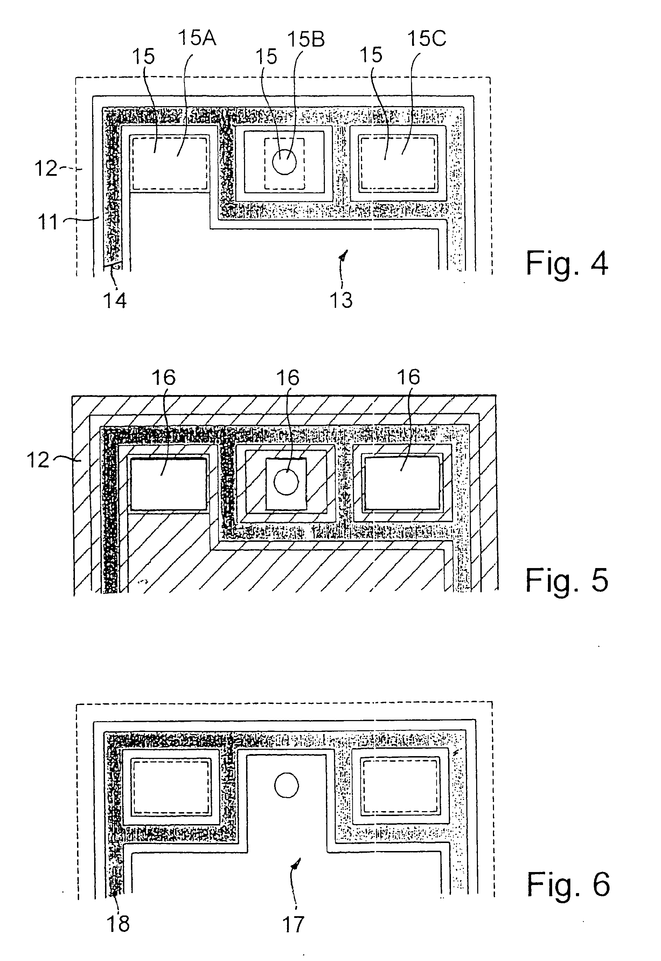

Ein Teil einer Brennstoffzelle gemäß dem Stand der Technik ist in den Figuren 4 bis 6 dargestellt. Fig. 4 zeigt eine Draufsicht auf eine kathodenseitige Bipolarplatte 11, welche benachbart zu einer flüssigkeits- und gasundurchlässigen MEA 12 angeordnet ist. Die MEA 12 hat üblicherweise eine rechteckige Form, entsprechend den in Fig. 4 gestrichelt dargestellten Konturen. Die Bipolarplatte 11 weist Gasverteilerstrukturen 13, die mit einem Dichtungsrahmen 14 zusammenwirken, welcher seinerseits an der MEA 12 anliegt, und Durchbrüche 15 auf, wobei einer der dargestellten Durchbrüche 15 einen Teil der Oxidator-Hauptleitung 15A, ein anderer einen Teil der Kühlmittel-Hauptleitung 15B und ein weiterer einen Teil der Brenngas-Hauptleitung 15C bildet. Der Dichtungsrahmen 14 dient zur Trennung des Oxidators, welcher über die Oxidator-Hauptleitung 15A zugeführt wird, von der Kühlmittel-Hauptleitung 15B und der Brenngas-Hauptleitung 15C.

Die MEA 12, in Fig. 5 schraffiert dargestellt, weist Elektroden sowie eine Polymermembran auf. Die MEA 12 ist mit den Durchbrüchen 15 entsprechenden Durchbrüchen 16 versehen, durch welche die Oxidator-Hauptleitung 15A, die Kühlmittel-Hauptleitung 15B und die Brenngas-Hauptleitung 15C verlaufen (vgl. Fig. 5), wobei die MEA 12 in den entsprechenden Bereichen in Kontakt mit den durch die jeweiligen Leitungen geleiteten Medien gelangt.

Fig. 6 zeigt ein Kühlflowfield 17 auf der Rückseite der Bipolarplatte 11, wobei ein zweiter Dichtungsrahmen 18 vorgesehen ist, welcher derart ausgebildet ist, dass er gemeinsam mit dem Kühlflowfield 17 dem insbesondere flüssigen Kühlmittel ermöglicht, von der Kühlmittel-Hauptleitung 15B in sämtliche Bereiche des Kühlflowfields 17 zu gelangen und auf diese Weise die Brennstoffzelle zu Kühlen, d.h. die anfallende Reaktionswärme abzutransportieren und die gewünschte Temperatur in der Brennstoffzelle einzustellen. Die Konturen der MEA 12 sind in Fig. 6 gestrichelt dargestellt.

Auf Grund der hohen Empfindlichkeit des Polymerelektrolyten gegenüber Kontamination mit Metall-Ionen, die rasch zu einer deutlichen und in den meisten Fällen irreparablen Beeinträchtigung der Protonenleitfähigkeit im Elektrolyten führen können, wird als Kühlflüssigkeit oft ein Dielektrikum eingesetzt oder alternativ mit Kühlflüssigkeit auf Basis von deionisiertem Wasser in Verbindung mit Ionentauschern gearbeitet.

Die direkte Koppelung von in der Automobilindustrie verbreiteten Wärmetauschern auf Aluminiumbasis mit dem Kühlkreislauf der Brennstoffzelle ohne Verwendung von Ionentauschern ist problematisch, da sich durch den Eintrag von Aluminium-Ionen aus dem Wärmetauscher über das Kühlmedium in den Polymerelektrolyten hier deutliche Beschädigungen und dadurch bedingt eine erhebliche Leistungs- und Wirkungsgradverschlechterung der Brennstoffzelle ergeben kann.

Es ist Aufgabe der Erfindung, eine verbesserte Brennstoffzelle zur Verfügung zu stellen.

Diese Aufgabe wird gelöst durch eine Brennstoffzelle mit den Merkmalen des Anspruches 1. Vorteilhafte Ausgestaltungen sind Gegenstand der Unteransprüche.

Erfindungsgemäß wird eine Brennstoffzelle mit mindestens zwei Platten, insbesondere Bipolarplatten, Dichtungsrahmen und einer dazwischen angeordneten MEA, insbesondere einer Membran-Elektroden-Anordnung mit zwei durch eine Polymerelektrolytmembran getrennte Elektroden, vorgesehen, wobei die Platten, die Dichtungsrahmen und die MEA Durchbrüche oder Aussparungen aufweisen und durch mindestens einen der Durchbrüche bzw. Aussparungen eine Kühlmittel-Leitung verläuft, wobei zwischen den Platten ein Übergangsstück vorgesehen ist, durch das die Kühlmittel-Leitung verläuft. Hierbei bildet das Übergangsstück einen direkten Übergang für das Kühlmittel von einer Platte zur benachbarten Platte, so dass das Kühlmittel nicht in Kontakt mit der MEA gelangt.

Hierbei weisen die MEA und/oder der/die Dichtungsrahmen vorzugsweise einen Ausschnitt oder eine Aussparung um das Übergangsstück auf.

Vorzugsweise bildet das Übergangsstück einen Teil der Kühlmittel-Leitung.

Gemäß einer bevorzugten Ausführungsform ist im Bereich des Übergangsstücks ein Spalt nach außen vorgesehen, damit eine mögliche Leckage des Kühlmittels leichter erkannt und rechtzeitig eine Beschädigung der Brennstoffzelle verhindert werden kann. Das Erkennen einer Leckage kann durch gefärbtes Kühlmittel erleichtert werden.

Das Übergangsstück kann bspw. ein elastischer Kunststoffring sein, jedoch auch direkt durch einen Teil eines der Dichtungsrahmen gebildet werden, welcher in diesem Fall eine etwas kompliziertere Gestalt aufweist.

Gemäß einer weiteren vorteilhaften Ausführung sind das Übergangsstück und die MEA zur Bildung einer baulichen Einheit miteinander verbunden. Das dadurch entstandene Bauteil erleichtert eine Montage der Brennstoffzelle, während eine Kontamination der Elektrolytfolie durch Kontakt mit Kühlflüssigkeit vermieden wird. Die Verbindung kann dabei beispielsweise eine Klebe-, Steck-, Schweiß- oder beliebige andere Verbindung sein.

Im folgenden wird die Erfindung anhand eines Ausführungsbeispiels unter Bezugnahme auf die Zeichnung im Einzelnen erläutert. In der Zeichnung zeigen:

Fig. 1 eine schematische Draufsicht auf eine kathodenseitige Bipolarplatte einer erfindungsgemäßen Brennstoffzelle mit angedeuteter MEA,

Fig. 2 eine schematische Draufsicht auf die Bipolarplatte von Fig. 1 mit dargestellter MEA,

Fig. 3 eine schematische Ansicht von unten auf die Bipolarplatte von Fig. 1 mit angedeuteter MEA,

Fig. 4 eine schematische Draufsicht auf eine kathodenseitige Bipolarplatte einer Brennstoffzelle gemäß dem Stand der Technik mit angedeuteter MEA,

Fig. 5 eine schematische Draufsicht auf die Bipolarplatte von Fig. 4 mit dargestellter MEA, und

Fig. 6 eine schematische Ansicht von unten auf die Bipolarplatte von Fig. 4 mit angedeuteter MEA.

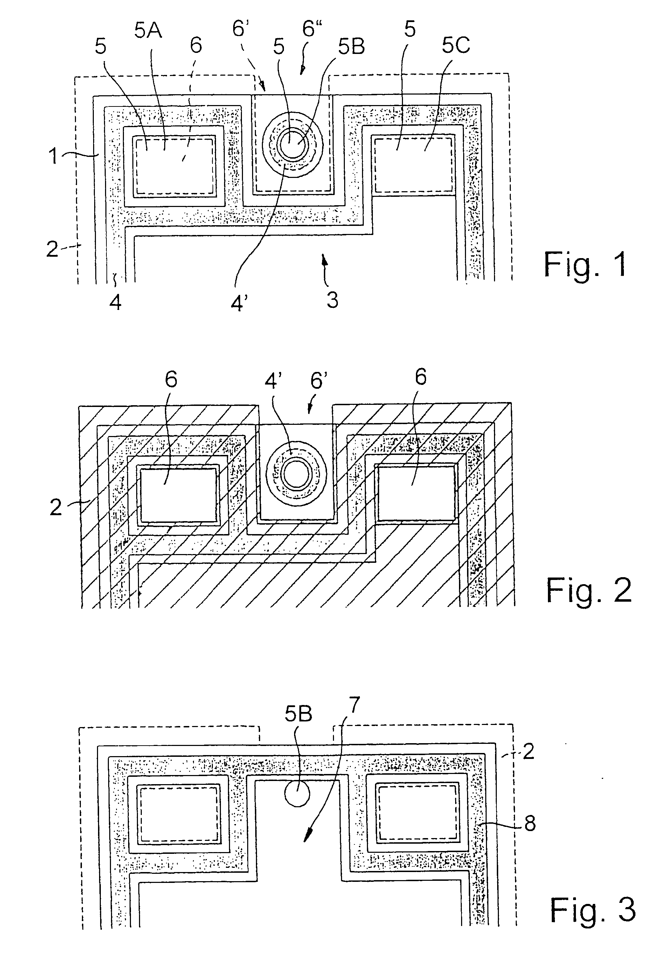

Fig. 1 zeigt einen Teil einer erfindungsgemäßen Brennstoffzelle, nämlich eine Draufsicht auf eine kathodenseitige Bipolarplatte 1, welche benachbart zu einer flüssigkeits- und gasundurchlässigen MEA 2 angeordnet ist, deren Konturen in Fig. 1 gestrichelt dargestellt sind. Die Bipolarplatte 1 weist Gasverteilerstrukturen 3, welche mit einem Dichtungsrahmen 4 zusammenwirken, welcher seinerseits an der MEA 2 anliegt, und Durchbrüche 5 auf, wobei einer der dargestellten Durchbrüche 5 einen Teil der Oxidator-Hauptleitung 5A, ein anderer einen Teil der Kühlmittel-Hauptleitung 5B und ein weiterer einen Teil der Brenngas-Hauptleitung 5C bildet. Der Dichtungsrahmen 4 dient zur Trennung des Oxidators, welcher über die Oxidator-Hauptleitung 5A zugeführt wird, von der Kühlmittel-Hauptleitung 5B und der Brenngas-Hauptleitung 5C.

Die MEA 2, in Fig. 2 schraffiert dargestellt, weist Elektroden sowie eine Polymermembran auf. Im Unterschied zu einer herkömmlichen MEA 12 weist die MEA 2 keine rechteckige Form auf, die ausschließlich mit den Durchbrüchen 5 entsprechenden Durchbrüchen 6 versehen ist, sondern weist im Bereich der Kühlmittel-Hauptleitung 5B einen Ausschnitt 6' auf, so dass die MEA 2 nicht in direkten Kontakt mit dem Kühlmittel gelangt (vgl. Fig. 2). Auch der Dichtungsrahmen 4 weist ein Form auf, die einen Ausschnitt 6" zeigt, welcher etwa dem Ausschnitt 6' der MEA 2 entspricht.

Damit keine Unterbrechung der Kühlmittel-Hauptleitung 5B erfolgt, ist ein Übergangsstück 4' im Verlauf der Kühlmittel-Hauptleitung 5B vorgesehen, welches den Abstand zwischen der kathodenseitigen Bipolarplatte 1 und einer nicht dargestellten anodenseitigen Bipolarplatte überbrückt und in Verlängerung zum Dichtungsrahmen 4, zur MEA 2 und zu einem anodenseitigen Dichtungsrahmen (nicht dargestellt) angeordnet ist. Gemäß dem vorliegenden Ausführungsbeispiel wird das Übergangsstück 4' durch einen elastischen Kunststoffring gebildet, jedoch kann das Übergangsstück 4' im Prinzip auch in einen der Dichtungsrahmen 4 integriert sein.

Entsprechend zeigt Fig. 3 ein Kühlflowfield 7 auf der Rückseite der Bipolarplatte 1, wobei auch hier ein Dichtungsrahmen 8 vorgesehen ist, welcher es dem insbesondere flüssigen Kühlmittel ermöglicht, von der Kühlmittel-Hauptleitung 5B in den Bereich des Kühlflowfields 7 zu gelangen und auf diese Weise die Brennstoffzelle zu kühlen, d.h. die anfallende Reaktionswärme abzutransportieren und die gewünschte Temperatur in der Brennstoffzelle einzustellen. Die sichtbaren Konturen der MEA 2 sind in Fig. 3 gestrichelt dargestellt.

Das oben beschriebene Übergangsstück 4' ermöglicht es, dass das Kühlmittel, welches über die Kühlmittel-Hauptleitung 5B dem Kühlflowfield 7 zugeführt wird, nicht in Kontakt mit der MEA 2 gelangt, wodurch eine Kontamination mit möglicherweise im Kühlmittel enthaltenen Metall-Ionen verhindert wird, so dass problemlos auch Wärmetauscher auf Metall-, insbesondere auf Aluminiumbasis, in den Kühlkreislauf integriert werden können und auf Vorrichtungen zur Filterung von Metall-Ionen aus dem Kühlmedium zum Schutz der MEA 2 verzichtet werden kann.

Auf Grund der Ausschnitte 6' und 6" ist die Dichtwirkung des Übergangsstückes 4' überprüfbar, so dass frühzeitig eine möglicherweise vorhandene Leckage erkannt und die undichte Stelle beseitigt werden kann. Eine Kontrolle der Brennstoffzelle in Hinblick auf eine mögliche Leckage des Kühlmittels lässt sich durch ein Einfärben des Kühlmittels erheblich vereinfachen.

**Bezugszeichenliste**

1, 11 Bipolarplatte
2, 12 MEA
3, 13 Gasverteilerstrukturen
4, 14 Dichtungsrahmen
4' Übergangsstück
5, 15 Durchbrüche (der Bipolarplatte 1, 11)
5A, 15A Oxidator-Hauptleitung
5B, 15B Kühlmittel-Hauptleitung
5C, 15C Brenngas-Hauptleitung
6, 16 Durchbrüche (der MEA 2, 12)
6' Ausschnitt (der MEA 2)
6" Ausschnitt (des Dichtungsrahmens 4)
7, 17 Kühlflowfield
8, 18 Dichtungsrahmen

**Patentansprüche**

1. Brennstoffzelle mit mindestens zwei Platten (1), Dichtungsrahmen (4) und einer dazwischen angeordneten MEA (2), wobei die Platten (1), die Dichtungsrahmen (4) und die MEA (2) Durchbrüche (5, 6) aufweisen und durch mindestens einen der Durchbrüche (5, 6) eine Kühlmittel-Leitung (5B) verläuft, wobei zwischen den Platten (1) ein Übergangsstück (4') vorgesehen ist, durch das die Kühlmittel-Leitung (5B) verläuft.

2. Brennstoffzelle nach Anspruch 1, **dadurch gekennzeichnet, dass** die MEA (2) einen Ausschnitt (6') um das Übergangsstück (4') aufweist.

3. Brennstoffzelle nach Anspruch 1 oder 2, **dadurch gekennzeichnet, dass** der Dichtungsrahmen (4) einen Ausschnitt (6") um das Übergangsstück (4') aufweist.

4. Brennstoffzelle nach einem der vorhergehenden Ansprüche, **dadurch gekennzeichnet, dass** das Übergangsstück (4') ein Teil der Kühlmittel-Leitung (5B) ist.

5. Brennstoffzelle nach einem der vorhergehenden Ansprüche, **dadurch gekennzeichnet, dass** das Übergangsstück (4') ein elastischer Kunststoffring ist.

6. Brennstoffzelle nach einem der vorhergehenden Ansprüche, **dadurch gekennzeichnet, dass** im Bereich des Übergangsstücks (4') ein Spalt nach außen vorgesehen ist.

7. Brennstoffzelle nach einem der vorhergehenden Ansprüche, **dadurch gekennzeichnet, dass** das Übergangsstück (4') ein Teil eines der Dichtungsrahmen (4) ist.

8. Brennstoffzelle nach einem der vorhergehenden Ansprüche, **dadurch gekennzeichnet, dass** das Übergangsstück mit der MEA eine bauliche Einheit bildet.

9. Brennstoffzelle nach einem der vorhergehenden Ansprüche, **dadurch gekennzeichnet, dass** dem Kühlmittel ein Farbstoff zugefügt ist.

10. Brennstoffzelle nach einem der vorhergehenden Ansprüche, **dadurch gekennzeichnet, dass** das Übergangsstück (4') aus einem elektrisch isolierenden Material besteht.

Fig. 1

Fig. 2

Fig. 3

Fig. 4

Fig. 5

Fig. 6